# EUROPÄISCHE PATENTSCHRIFT

(11) **EP 0 746 913 B1**
(45) Veröffentlichungstag und Bekanntmachung des Hinweises auf die Patenterteilung: **07.01.1998**
(21) Anmeldenummer: 94930208.7
(22) Anmeldetag: 21.10.1994
(51) Int. Cl.: H04B 1/66

(54) **VERFAHREN ZUM KASKADIERTEN CODIEREN UND DECODIEREN VON AUDIODATEN**
PROCESS FOR THE CASCADE CODING AND DECODING OF AUDIO DATA
PROCEDE DE CODAGE ET DE DECODAGE EN CASCADE DE DONNEES AUDIO

(30) Priorität: 22.02.1994 DE 4405659
(43) Veröffentlichungstag der Anmeldung: 11.12.1996
(73) Patentinhaber: FRAUNHOFER-GESELLSCHAFT ZUR FÖRDERUNG DER ANGEWANDTEN FORSCHUNG E.V., 80636 München (DE)
(72) Erfinder: KEYHL, Michael, D-90425 Nürnberg (DE); POPP, Harald, D-90587 Tuchenbach (DE); EBERLEIN, Ernst, D-91091 Grossenseebach (DE); BRANDENBURG, Karl-Heinz, D-91054 Erlangen (DE); GERHÄUSER, Heinz, D-91344 Waischenfeld (DE); SCHMIDMER, Christian, D-90768 Fürth (DE)
(74) Vertreter: Schoppe, Fritz, Dipl.-Ing.
(86) Internationale Anmeldenummer: EP9403478
(87) Internationale Veröffentlichungsnummer: WO9522858

(56) Entgegenhaltungen:
- EP-A- 0 420 745
- ALTA FREQUENZA, Bd.XLVI, Nr.8, August 1977, MILANO IT Seiten 362 - 364 DECINA 'Multiple ADPCM co-decodings of speech signals'
- JOURNAL OF THE AUDIO ENGINEERING SOCIETY, Bd.39, Nr.5, Mai 1991, NEW YORK US Seiten 371 - 377, XP208361 'AES Recommended Practice for Digital Audio Engineering - Serial Multichannel Audio Digital Interface (MADI)'

## Beschreibung

Die vorliegende Erfindung befaßt sich mit einem Verfahren zum kaskadierten Codieren und Decodieren von Audiodaten.

Insbesondere befaßt sich die Erfindung mit einem Verfahren zum kaskadierten Codieren und Decodieren von Audiodaten zur Verbesserung der Tonqualität eines aufgrund der Audiodaten erzeugten Tonsignales nach einer kaskadierten Audio-Codierung/Decodierung.

Bei dem kaskadierten Codieren und Decodieren von Audiodaten werden innerhalb jeder Codecstufe der Kaskade für jeweils einen Datenblock mit einer bestimmten Anzahl von zeitlichen Eingangsdaten die Spektralkomponenten des zu diesem Datenblock gehörigen Kurzzeitspektrums gebildet. Sodann wird ein codiertes Signal ausgehend von den Spektralkomponenten für den jeweiligen Datenblock unter Verwendung eines psychoakustischen Modells zur Steuerung der Bitaufteilung für die Spektralkomponenten mittels Quantisieren und Codieren, gebildet woraufhin innerhalb des Decoderteiles der Codecstufe zur Wiedergewinnung von zeitlichen Ausgangsdaten eine Decodierung vorgenommen wird.

Die Codierung von Tonsignalen mit möglichst geringen Qualitätsverlusten hat in den letzten Jahren erhebliche Fortschritte gemacht. Moderne Codierverfahren nutzen dabei die Wahrnehmbarkeitsgrenze des menschlichen Ohres und versuchen, das bei der Codierung erzeugte Quantisierungsgeräusch derart der jeweiligen Mithörschwelle anzupassen, daß trotz erheblicher Datenreduktion keine hörbare Verschlechterung entsteht. Die nach diesem Prinzip arbeitenden Codierungs- und Decodierungsvorrichtungen werden auch als "perceptual codecs" bezeichnet.

Derartige Verfahren eignen sich für eine Vielzahl von Anwendungen. Man kann sie praktisch überall dort vorteilhaft einsetzen, wo man Tonsignale von hoher Qualität speichern oder übertragen will und die vorhandene Kapazität, wie beispielsweise das Speichervolumen oder die Kanalbandbreite, möglichst effektiv nutzen möchte.

Beispiel für derartige Anwendungsfälle sind die Musikübertragung über das ISDN-Telefonnetz, die Speicherung von Sprachansagen oder sogenannte "Jingles" in Flash ROM Speicherkarten, die Speicherung von Musik innerhalb von Musikrecordern mit einer sogenannten Mini-Disk oder das DCC-Verfahren.

Beispiele für Codierverfahren, die nach dem oben beschriebenem Prinzip arbeiten, sind die unter den Bezeichnungen AC-2 und AC-3 der Firma Dolby Inc. eingesetzten Verfahren, das Verfahren ATRAC der Firma Sony Corp. oder die Tonverfahren nach den Normen ISO-MPEG (IS11172-3), Layer-1-2-3.

Alle diese Verfahren arbeiten blockorientiert, d.h. sie analysieren jeweils eine gewisse Zahl von zeitlichen Eingangsaudiodaten bzw. Audioabtastwerten, also einen "Datenblock", und bestimmen daraus die in den zu den jeweiligen Datenblöcken zugehörigen Kurzzeitspektren vorhandenen Spektralkomponenten. Anschließend erfolgt die Quantisierung und Codierung der Spektralkomponenten, wobei der Coder ein psychoakustisches Modell verwendet, um das vorliegende Kurzzeitspektrum zu analysieren und um daraus die Steuerung der Bitaufteilung für die einzelnen Spektralkomponenten abzuleiten.

Zusammenfassend kann man diese Methode auch "perceptual noise shaping" nennen: das beim Quantisierungsvorgang entstandene Rauschen wird an die Mithörschwelle angepaßt, wobei der Coder versucht, einen Sicherheitsabstand ("noise-to-mask-ratio", NMR) zu der geschätzten Hörschwelle einzuhalten.

Bei bekannten Verfahren zum Codieren und Decodieren von Audiodaten verschlechtert sich die Tonqualität des ausgangsseitigen Audiosignales mit zunehmender Anzahl von Codecstufen.

Aus der EP-A-0420745 ist eine Codiervorrichtung zum Erzeugen digitaler Audiosignale bekannt, bei der die Bandbreite für höher frequente Bereiche der Digitalsignale zunehmend breiter gewählt ist und bei der die codierten Signale für diese jeweiligen Frequenzbereiche gebildet werden, so daß die Anzahl der Abtastwerte innerhalb eines Blocks für höhere Frequenzbereiche ansteigt. Die Quantisierung der Signale wird aufgrund einer den jeweiligen Bändern zugeordneten Bitzahl durchgeführt.

Die Fachveröffentlichung Alta Frequenza, Band XLVI, Nr. 8, August 1977, Mailand, Seiten 362-364 befaßt sich mit dem Signal-Rausch-Verhältnis, das bei in Kaskade geschalteten adaptiven Differential-Puls-Code-Modulations-Codecs auftritt. Die Signalverschlechterung aufgrund des vielfachen Codierungs- und Decodierungsprozesses wird als eine monoton abfallende Reihe ermittelt.

Der Erfindung liegt daher die Aufgabe zugrunde, ein Verfahren zum kaskadierten Codieren und Decodieren von Audiodaten zu schaffen, bei dem die Qualität des ausgangsseitigen Audiosignales nur in einem geringen Maß in Abhängigkeit von der Zahl der Codestufen beeinträchtigt wird.

Diese Aufgabe wird durch ein Verfahren gemäß Patentanspruch 1 gelöst.

Der Erfindung liegen Untersuchungen an kaskadierten Audiocodecs zugrunde, welche auch als "Tandem Codecs" bezeichnet werden, welche gezeigt haben, daß bei bisherigen Verfahren sich selbst bei ausschließlicher Verwendung digitaler PCM-Schnittstellen innerhalb der Codeckette die Tonqualität infolge der Kaskadierung nach jedem weiteren Codecschritt verschlechtert.

Der Erfindung liegt die Erkenntnis zugrunde, daß die Ursachen für eine derartige Qualitätseinbuße in der bei den bekannten Verfahren vollkommen asynchronen Blockbildung in jeder einzelnen Codecstufe bezogen auf die Lage des Blockes in vorhergehenden Codecstufen liegt. Mit anderen Worten werden bei bekannten Verfahren innerhalb jeder Codecstufe abhängig von dem jeweiligen Einschaltzeitpunkt andere Sätze von Eingangsdaten zu jeweils einem "Datenblock" zusammengefaßt. Damit bearbeitet bei bekannten Verfahren jeder Codec ein anderes Kurzzeitspektrum und kommt damit zwangsläufig zu anderen Bitverteilungen.

In einem anschaulichen Extremfall kann das z.B. zur Folge haben, daß in einer Codecstufe ein Vorecho korrekt von einem anschließenden Anschlag verdeckt wird, während die nachfolgende Codecstufe die Blockgrenze gerade zwischen das Vorecho und den Anschlag legt und damit die beiden Teilsignale getrennt analysiert und so zu einer vollständig anderen Bitverteilung kommen kann.

Die Erfindung sieht daher vor, bei zumindest einem Schritt des Codierens innerhalb zumindest einer Codecstufe der Mehrzahl von kaskadierten Codecstufen dem codierten Signal eine Kennung hinzuzufügen, die den Beginn eines Datenblocks darstellt, wobei bei dem Schritt des Codierens in wenigstens einer der in der Kaskade nachfolgenden Codecstufen die Einteilung der jeweils zu codierenden Datenblöcke aufgrund dieser Kennung vorgenommen wird.

Die Erfindung schafft ein Verfahren zum kaskadierten Codieren und Decodieren von Audiodaten, bei dem
in jeder einer Mehrzahl von Codecstufen
- für einen Datenblock mit einer bestimmten Zahl von zeitlichen Eingangsdaten die Spektralkomponenten des zu diesem Datenblock gehörigen Kurzzeitspektrums gebildet werden,
- ein codiertes Signal aufgrund der so gewonnenen Spektralkomponenten für diesen Datenblock unter Verwendung eines psychoakustischen Modells gebildet wird, und
- das codierte Signal zur Wiedergewinnung von zeitlichen Ausgangsdaten decodiert wird,
wobei bei dem Schritt des Codierens in einer der Codecstufen dem codierten Signal eine Kennung hinzugefügt wird, die den Beginn eines Datenblocks darstellt, und bei dem Schritt des Codierens in wenigstens einer der in der Kaskade nachfolgenden Codecstufen die Einteilung der Eingangsdaten in die jeweils zu codierenden Datenblöcke aufgrund der Kennung vorgenommen wird.

Im einfachsten Fall bezeichnet diese Kennung den Beginn eines Datenblocks. Soweit die Codecstufen der Kaskade homogen sind, also eine Blockbildung mit übereinstimmenden Blockgrößen vornehmen, ermöglicht das Vorsehen der Trennung in dem codierten Tonsignal eine synchrone Blockbildung zumindest innerhalb der untereinander homogenen Codecstufen der Kette. Dies führt dazu, daß die betreffenden nachfolgenden Codecstufen mit gleicher Datenblockgröße verglichen mit der Codecstufe, die die Kennung hinzufügte, eine ähnliche Bewertung der Kurzzeitspektren vornehmen. Die so bewirkte synchrone Blockbildung zumindest innerhalb der untereinander homogenen Stufen der Codeckette führt insbesondere bei Codecketten mit mehr als drei Kaskadenstufen zu einer erheblichen Verbesserung der Tonqualität, wobei eine Erhöhung der NMR-Werte von ungefähr 2 dB verglichen mit unsynchronisierten Codecketten ohne weiteres erreicht werden kann.

Besondere Bedeutung kommt dem erfindungsgemäßen Verfahren in Anwendung auf das digitale Audiosignal insbesondere im Falle des verbreiteten Standards AES-3 zu. Dieser Standard wird gegenwärtig im professionellen Studiobereich verwendet, findet sich jedoch in einer Variante des Standards (IEC 958) auch innerhalb von Endabnehmergeräten, wie beispielsweise CD-Spielern, DAT-Recordern, DCC-Recordern, MD-Recordern und sogenannten "digitalen Verstärkern".

Der Standard AES-3 ist blockorientiert aufgebaut. Jeweils 192 Abtastwerte von zwei Audiokanälen werden zu einem Block zusammengefaßt, wobei ein Blockanfang im Datenstrom durch eine besondere Präambel "Z" gekennzeichnet wird. Für jeden Abtastwert werden 32 Bit bereitgestellt; davon entfallen 4 Bit auf die Präambel, 4 Bit auf Hilfsdaten ("AUX"), 20 Bit auf den eigentlichen Abtastwert und 4 Bit auf zusätzliche Subcode-Daten ("V, U, C, P").

Zur Kennzeichnung des ersten Abtastwertes eines codierten "Datenblocks" gemäß dem erfindungsgemäßen Verfahren kommen verschiedene Mechanismen des AES-3-Standards in Betracht. Hierbei ist zu unterscheiden zwischen:
a) Datenblöcken, deren Größe kein ganzzahliges Vielfaches der AES-3-Blockgröße von jeweils 192 Abtastwerten darstellt.
b) Datenblöcken, deren Größe ein ganzzahliges Vielfaches der AES-3-Blockgröße von 192 Abtastwerten darstellt.

zu a) In dem erstgenannten Fall kann man die Blockstruktur des AES-Formates nicht vorteilhaft ausnutzen. Der erste Abtastwert eines codierten Datenblocks kann sich an einer beliebigen Stelle innerhalb eines AES-3-Blocks befinden.
   Gemäß der Erfindung findet in diesem Anwendungsfall die Kennzeichnung bei dem entsprechenden Abtastwert statt. Hierzu können die "user-data"-Bits verwendet werden, nämlich im sogenannten time slot 29 das Bit "U", welches beispielsweise auf "Eins" für den Blockbeginn und auf "Null" innerhalb des Blockes gesetzt werden kann. Im sogenannten "Channel-Status" (time slot 30 "C") könnte diese Bedeutung des U-Datenkanals durch eine Ergänzung in Byte 1, Bits 4 bis 7 ("encoded user bits management") vermerkt werden.
   Der Vorteil dieser Lösung liegt in einer Erweiterung des AES-3-Standards, welche vollständig kompatibel zu entstehenden Hardware-Lösungen ist. Ähnliche Lösungen kommen auch bei dem Standard IEC958 in Betracht.
   Gemäß der Erfindung können zusätzlich zu den grundsätzlichen Blockmarkierungen Zusatzkennungen eingefügt werden, welche die Arbeit des Codecs unterstützen, wie beispielsweise Informationen über die aktuell verwendete Größe des codierten Datenblocks, die Art der Codierung, usw..
zu b) In diesem Sonderfall kann gemäß der Erfindung die Blockstruktur des AES-3-Signals genutzt werden, um die codierten Datenblöcke direkt im AES-3-Raster unterzubringen. In diesem Fall kann die Kennung auch durch die spezielle Präambel ("Z2") erfolgen, welche die jetzige Block-Präambel an den entsprechenden Stellen ersetzt.

## Patentansprüche

1. Verfahren zum kaskadierten Codieren und Decodieren von Audiodaten, bei dem
in jeder einer Mehrzahl von Codecstufen
- für einen Datenblock mit einer bestimmten Zahl von zeitlichen Eingangsdaten die Spektralkomponenten des zu diesem Datenblock gehörigen Kurzzeitspektrums gebildet werden,
- ein codiertes Signal aufgrund der so gewonnenen Spektralkomponenten für diesen Datenblock unter Verwendung eines psychoakustischen Modells gebildet wird, und
- das codierte Signal zur Wiedergewinnung von zeitlichen Ausgangsdaten decodiert wird,
dadurch gekennzeichnet,
daß bei dem Schritt des Codierens in einer der Codecstufen dem codierten Signal eine Kennung hinzugefügt wird, die den Beginn eines Datenblocks darstellt, und
daß bei dem Schritt des Codierens in wenigstens einer der in der Kaskade nachfolgenden Codecstufen die Einteilung der Eingangsdaten in die jeweils zu codierenden Datenblöcke aufgrund der Kennung vorgenommen wird.

2. Verfahren nach Anspruch 1, dadurch gekennzeichnet,
daß die Kennung den ersten Abtastwert eines codierten Datenblocks angibt.

3. Verfahren nach Anspruch 2, dadurch gekennzeichnet,
daß zumindest in den zueinander homogenen Codecstufen innerhalb einer Codeckette aufgrund der Kennung eine synchrone Blockbildung mit übereinstimmender Blockgröße bei jeweils miteinander übereinstimmender Lage der Einteilung der Daten in Blöcke vorgenommen wird.

4. Verfahren nach einem der Ansprüche 1 bis 3, dadurch gekennzeichnet,
daß das digitale Audiosignal gemäß dem Standard AES-3 codiert wird.

5. Verfahren nach einem der Ansprüche 1 bis 3, dadurch gekennzeichnet,
daß das digitale Audiosignal gemäß dem Standard IEC958 codiert wird.

6. Verfahren nach Anspruch 4 oder 5, dadurch gekennzeichnet,
daß sich im Falle von Datenblöcken, deren Größe kein ganzzahliges Vielfaches der AES-3-Blockgröße darstellt, die Kennung zur Kennzeichnung des ersten Abtastwertes des codierten Datenblocks in dem "user-data"-Bit des betreffenden Blocks befindet.

7. Verfahren nach Anspruch 4 oder 5, dadurch gekennzeichnet,
daß bei Datenblöcken, deren Größe ein ganzzahliges Vielfaches der AES-3-Blockgröße darstellt, die Datenblöcke innerhalb des AES-3-Rasters angeordnet werden, wobei die Kennung durch eine spezielle Präambel ("Z2") erfolgt.

## Claims

1. A method for the cascaded coding and decoding of audio data in which
in each of a plurality of codec stages
- for a data block with a certain number of time input data, the spectral components of the short-time spectrum associated with this data block are formed,
- a coded signal is formed on the basis of the so formed spectral components of a data block by employing a psycho-acoustic model, and
- the coded signal is decoded to retrieve time output data,
characterized in
that at the coding step in one of the codec stages an identification code marking the start of a data block is added to the coded signal, and
that at the coding step in at least one of the subsequent codec stages in the cascade the division of the input data in the data blocks to be coded is performed on the basis of the identification code.

2. A method according to claim 1, characterized in
that the identification code indicates the first scanning value of a coded data block.

3. A method according to claim 2, characterized in
that at least in the mutually homogeneous codec stages within a codec chain, synchronous block formation with the same block size and with the same location of the division of the data in blocks is performed on the basis of the identification code.

4. A method according to one of the claims 1 to 3, characterized in
that the digital audio signal is coded according to the standard AES-3.

5. A method according to one of the claims 1 to 3, characterized in
that the digital audio signal is coded according to the standard IEC958.

6. A method acording to claim 4 or 5, characterized in
that for data blocks whose size is not an integral multiple of the AES-3 block size, the identification code indicating the first scanning value of the coded data block is located in the "user-data" bit of the block concerned.

7. A method according to claim 4 or 5, characterized in
that for data blocks whose size is an integral multiple of the AES-3 block size, the data blocks are arranged within the AES-3 raster, wherein the identification code consists of a special preamble ("Z2").

## Revendications

1. Procédé de codage et de décodage en cascade de données audio dans lequel
dans chacun des étages d'une série d'étages codeurs-décodeurs
- pour un bloc de données comprenant un nombre défini de données d'entrées instantanées, les composantes spectrales du spectre instantané qui appartient à ce bloc de données sont formées,
- un signal codé est formé, sur la base des composantes spectrales ainsi obtenues pour ce bloc de données, en utilisant un modèle psycho-acoustique, et
- le signal codé est décodé pour récupérer des données de sortie instantanées,
caractérisé en ce que
un élément identifiant qui représente le début d'un bloc de données est ajouté au signal codé au cours de l'étape de codage dans l'un des étages codeurs-décodeurs, et
la division des données d'entrée dans les blocs de données respectifs à coder est exécutée au cours de l'étape de codage sur la base de l'élément identifiant dans au moins l'un des étages codeurs-décodeurs suivants en cascade.

2. Procédé selon la revendication 1, caractérisé en ce que
l'élément identifiant indique la première valeur d'échantillon d'un bloc de données codé.

3. Procédé selon la revendication 2, caractérisé en ce que
au moins dans les étages codeurs-décodeurs homogènes entre eux présents à l'intérieur d'une chaîne de codeurs-décodeurs, une formation synchrone de blocs est mise en oeuvre sur la base de l'élément identifiant d'une façon telle que la dimension de chaque bloc est en concordance avec celle des autres blocs, et que la position de la division des données contenues dans chaque bloc est en concordance avec la position correspondante dans les autre blocs.

4. Procédé selon l'une des revendications 1 à 3, caractérisé en ce que
le signal audio numérique est codé selon la norme AES-3.

5. Procédé selon l'une des revendications 1 à 3, caractérisé en ce que
le signal audio numérique est codé selon la norme IEC958.

6. Procédé selon la revendication 4 ou la revendication 5, caractérisé en ce que
l'élément identifiant destiné à caractériser la première valeur d'échantillon du bloc de données se trouve dans le bit "user-data" du bloc concerné, dans le cas où la dimension des blocs de données ne représente pas un multiple entier de la dimension de bloc AES-3.

7. Procédé selon la revendication 4 ou 5, caractérisé en ce que
les blocs de données sont agencés à l'intérieur de la trame AES-3 dans le cas où la dimension des blocs de données représente un multiple entier de la dimension de bloc AES-3, l'élément identifiant résultant alors d'un préambule spécial ("Z2").
